# EUROPEAN PATENT APPLICATION

(11) **EP 4 134 872 A1**
(43) Date of publication of application: **15.02.2023**
(21) Application number: 21306110.4
(22) Date of filing: 10.08.2021
(51) Int. Cl.: G06N 3/04, G06N 3/08, G06N 5/00, G06N 7/00

(54) **METHOD FOR AUTOMATICALLY DETECTING ANOMALIES IN LOG FILES**

(71) Applicant: Packetai, 94160 Saint-Mande (FR)
(72) Inventor: AZZOUNI, Abdelhadi, 75013 PARIS (FR); COHEN SABBAN Q, Isaac, 92100 BOULOGNE-BILLANCOURT (FR)
(74) Representative: Nony

(57) **Abstract**

Method for automatically detecting anomalies in log files, each message of the log file comprising pattern sequence(s), the method using a neural network trained beforehand, and comprising at least the following steps:
a. parsing the first message to determine a first pattern sequence,
b. converting said first pattern sequence of the first message into a first pattern vector having a predefined position in a predetermined dense space,
c. transmitting said first pattern vector to the neural network to predict at least one second pattern vector associated with a pattern sequence of the second message,
d. parsing the second message to determine a second pattern sequence,
e. converting said second pattern sequence of the second message into a second pattern vector, said vector having a predefined position in said predetermined dense space,
f. comparing said pattern vectors in order to assert if an anomaly in the operation of the component(s) has occurred.

## Description

### Technical field

The present invention relates to a method for monitoring log files related to the operation of one or more components, such as applications, services, sensors, or instruments.

Modern software systems, such as an application executed on a computer, can generate log files comprising several messages that may be used to troubleshoot the program. Messages comprised in log files can be unstructured free-form text strings, which can record events or states of interest and capture the intent of the developer. These logs files can be read by a developer or a user to detect the events, states, and other interesting occurrences. Usually, when the execution of a program fails, for example when it does not perform according to expectations, system operators can examine recorded log files to obtain insights about the failure and find out the potential root causes.

The present invention relates to a method for automatically detecting anomalies in one or more log files by using a neural network trained beforehand. The invention also relates to a system for implementing such method. Finally, the invention relates to a method for training the neural network used in the method for automatically detecting anomalies in one or more log files.

### Prior art

The paper "DeepLog : Anomaly Detection and Diagnosis from system Logs through Deep Learning" written by Min, D *et al*, discloses a model for detecting anomalies in log files. This model uses a deep neural network model using a Long Short-Term Memory (LSTM) layer to model logs files as a natural language sequence. The deep neural network of this model learns patterns of messages contained in log files from normal execution. It detects anomalies when the pattern of one message deviates from normal execution.

This model is designed to be run per component, said component being for example an application, a service, a sensor, or an instrument. This means that one needs to deploy one model for each monitored component. This model is therefore not easily scalable.

There is a need to further improve automatic detection of anomalies in log files. In particular, there is a need for a model which is more scalable and can be run simultaneously on a large number of components.

The present invention notably seeks to meet this need.

### Disclosure of the invention

One subject of the invention is a method for automatically detecting anomalies in one or more log files related to the operation of one or more components and generated beforehand, each log file comprising at least a first and a second text string messages, each message comprising at least one pattern sequence, the method using a neural network trained beforehand on previously acquired log files, and comprising at least the following steps:
a. parsing the first message to determine a first pattern sequence,
b. converting said first pattern sequence of the first message into a first pattern vector, said vector having a predefined position in a predetermined dense space,
c. transmitting said first pattern vector to the neural network to predict at least one second pattern vector associated with a pattern sequence of the second message,
d. parsing the second message to determine a second pattern sequence,
e. converting said second pattern sequence of the second message into a second pattern vector, said vector having a predefined position in said predetermined dense space,
f. comparing said second pattern vector predicted at step c) to said second pattern vector obtained at step e) from said second pattern sequence, in order to assert if an anomaly in the operation of the component(s) has occurred.

The invention allows to handle a large number of monitored components.

The neural network is adapted to predict the second message in the log files and to deduce from the comparison between the predicted message and the actual second message if the behaviour of the component is normal.

Throughout the operation of a component, different normal successions of messages can occur in the log file. The neural network may predict one or more second messages. In particular, it can predict those messages with their associated probabilities to occur.

The second message predicted by the neural network may comprise one or more messages forming a sequence. The neural network can therefore predict a sequence of several messages and compare it to the actual sequence. If there is a difference between those two sequences, an anomaly may be detected.

If the actual second message differs from the one or more predicted messages, the neural network may emit an alert to highlight the fact that there may be an anomaly in the execution of the monitored component.

Thanks to the invention, it is not necessary for the neural network to learn all possible error messages that can occur in a log file to detect anomalies. The neural network is configured to detect when the succession of two messages in the log file is abnormal. It can then assert if an anomaly in the operation of the component(s) has occurred.

The neural network is configured to solve a regression problem: using past messages, future messages can be predicted at each step.

Each message may further comprise one or more variable(s) embedded in at least one pattern sequence or located between two consecutive pattern sequences. Said variable(s) may be dismissed from said messages in order for the neural network to use only the pattern sequences for the prediction.

The log file may be analysed as a free-text string, and a pattern extractor may separate for each message the pattern sequence, which is constant, and the variables whose values depend on the execution of the program. This allows analysing only the constant part of the message for the prediction.

In another embodiment of the invention, said variable(s) may be also transmitted to the neural network in order for the neural network to use it for the prediction.

Step (b) of converting a pattern sequence into a pattern vector may be performed by an embedding layer of the neural network.

Said embedding layer allows the creation of a dense space in which a dense vector represents a pattern sequence. In this dense space, dense vector representation of patterns sequences that are similar from one another or that are often associated with will be close. This allows having group patterns sequences which have semantic similarity and simplifying the prediction of the neural network. For example, the predicted dense vector representation of the pattern sequence of the second message may be close, in the dense space, to the dense vector representation of the pattern sequence of the first message. The neural network may select the predicted second pattern sequence among the patterns sequences that have a dense vector representation in the neighbourhood of the dense vector representation of the pattern sequence of the first message.

One of the objectives of this dense vector representation is a reduction of dimension, which increases the efficiency of the method according to the invention.

The number of words in the vocabulary of the dense space may depends on the log files received from the user.

The choice of the embedding layer may depend on the type of monitored components. By choosing the adapted embedding layer, the method according to the invention may be adapted to a large number of different types of components.

The embedding layer may increase the accuracy of the neural network's prediction.

The neural network may comprise at least two LSTM-layers forming a Bidirectional LSTM layer. One LSTM-layer may be adapted to read the messages in a forward direction and the other LSTM-layer may be adapted to read the messages in a backward direction.

A Bidirectional LSTM layer, or bi-LSTM layer, may comprise two LSTM layers, one taking the input in a forward direction and the other in a backward direction. The use of Bi-LSTM layer effectively increases the amount of information available for the neural network. This allows the neural network to know what words immediately follow and precede a word in a sentence. This improves the context available for the neural network.

These LSTM layers allow modelling log files as a natural language sequence. The neural network can automatically learn pattern sequences of messages from normal execution and detect anomalies when pattern sequences of messages deviate from the model trained from messages sequences in log files under normal execution.

The neural network is preferably a recurrent neural network.

The neural network may further comprise an attention layer adapted to reduce the weight of certain types of pattern sequences.

Said attention layer allows reducing the weight of useless messages of log file so that relevant messages can have a higher weight and therefore improve the accuracy of the prediction. This also allows to reduce the consumed resources.

Useless messages of the log file(s) may be for example a message that indicates that a database client program is connected to a database. This message can be repeated many times during the execution of the program and may bias the learning of the neural network.

Preferably, the attention layer used is a self-attention layer. Self-attention, also known as intra-attention, is an attention mechanism relating different positions of a single message in order to compute a representation of the message. The self-attention mechanism enables the neural network to learn the correlation between the current words of the message and the previous part of the message.

Preferably, the attention layer uses a vector whose coordinates are the words of the message. The weight of each coordinate may be determined by using a SoftMax function.

The pattern sequences may be allocated to several classes forming a dataset of classes. The method may further comprise the step of:
- under-sampling the classes of pattern sequences having the highest number of occurrences in order to get a substantially balanced dataset of classes.

Some pattern sequence has a higher representation in the dataset, which means that there is a relatively large number of occurrences of this pattern sequence in the dataset. This high frequency could bias the model used by the neural network and avoid the model to learn pattern sequence with low occurrences.

In order to balance the dataset used by the neural network, an under-sampling method can be applied to the dataset.

Under-sampling may consist in sampling from the majority class in order to reduce the number of occurrences of this class. There can be one or more majority classes.

The use of an under-sampling method allows to reduce the calculation time and to increase performance and accuracy of the neural network.

The method may further comprise the step of:
- automatically determine one or more hyperparameter(s) for the neural network by using a Bayesian search.

Hyperparameter(s) are the variables which determine the neural network structure and how the neural network is trained. Different datasets require different sets of hyperparameter(s) to offer an accurate prediction.

Hyperparameter(s) that can be automatically determined by the Bayesian search are for example the topology of the neural network, the size of a neural network or the learning rate.

The Bayesian search can also determine some parameters of the embedding layer such as the size of the dense space of the embedding layer and/or the size of the dense vector representing pattern sequence. The Bayesian search can also be used to determine the architecture of the neural network in particular the use of a skip gram model or a continuous bag of words model. Bayesian search may also be used to determine the number of n-grams.

Hyperparameter(s) of the neural network may be fine-tuned based on the result of the Bayesian search on a validation dataset.

Bayesian search provides a principled technique based on Bayes Theorem to direct a search of a global optimization problem that is efficient and effective. It works by building a probabilistic model of the objective function, called the surrogate function, that is then searched efficiently with an acquisition function before candidate samples are chosen for evaluation on the real objective function.

By automatically determining hyperparameter(s), the method according to the invention allows searching for optimal hyperparameter(s) on large modern software systems comprising a lot of different components. The method according to the invention is therefore more scalable than the ones pertaining to the prior art.

Said Bayesian search may be performed based on the hypothesis that there is no anomaly in the operation of the component(s) associated with said log file(s).

Said log files may be related to the operation of several different components, for example, database components in particular mysql or mongodb component, web service components in particular apache web services, nginx or messaging engines in particular kafka, rabbitmq

According to another one of its aspects, the invention also relates to a system for automatically detecting anomalies in one or more log files related to the operation of one or more components and generated beforehand, the system comprising at least one neural network and being adapted to perform the method according to the invention.

The neural network may comprise at least two LSTM-layers forming a bi-LSTM layer, one LSTM-layer being adapted to read the messages in a forward direction and the other LSTM-layer being adapted to read the messages in a backward direction.

The neural network may further comprise at least one embedding layer adapted to perform the step of converting a pattern sequence into a pattern vector.

According to another one of its aspects, the invention also relates to a computer program comprising instructions which, when the program is executed by a computer, cause the computer to carry out the steps of the method according to the invention.

According to another one of its aspects, the invention also relates to a computer-readable medium comprising instructions which, when executed by a computer, cause the computer to carry out the steps of the method according to the invention.

According to another one of its aspects, the invention also relates to a method for training a neural network, in particular included in a system according to the invention, used in the detection of anomalies in one or more log files related to the operation of one or more components, using at least previously acquired log files, each log file comprising at least a first and a second text string messages, each message comprising at least one pattern sequence, the first message of each log file having been parsed to determine a first pattern sequence, said first pattern sequence having been converted into a first pattern vector, said vector having a predefined position in a predetermined dense space,
the method comprising at least the steps of associating said first pattern vector to a second pattern vector relative to a pattern sequence of the second message, and of training said neural network to learn said association.

Preferably, the learning of the neural network is unsupervised.

The neural network is trained beforehand to be configured to autonomously learn the different sequences of messages of the log file(s), i.e., the different possible successions of a first and a second message.

Training may last at least one day, better at least three days, better at least a week. During this time, all the messages of the log files are transmitted to the neural network to serve as training data. With such duration of training, the amount of data may be enough to obtain an acceptable accuracy of precision.

### Brief description of the drawings

The invention may be better understood on reading the following detailed description of non-limiting implementation examples thereof and on studying the appended drawing, in which:
figure 1 is a block diagram illustrating the different steps of a prior art method for automatically detecting anomalies in a log file,
figure 2 is a block diagram illustrating an example of different steps of the method according to the invention, and
figure 3 is an example of vectors of pattern sequences represented in a predetermined dense space.

### Detailed description

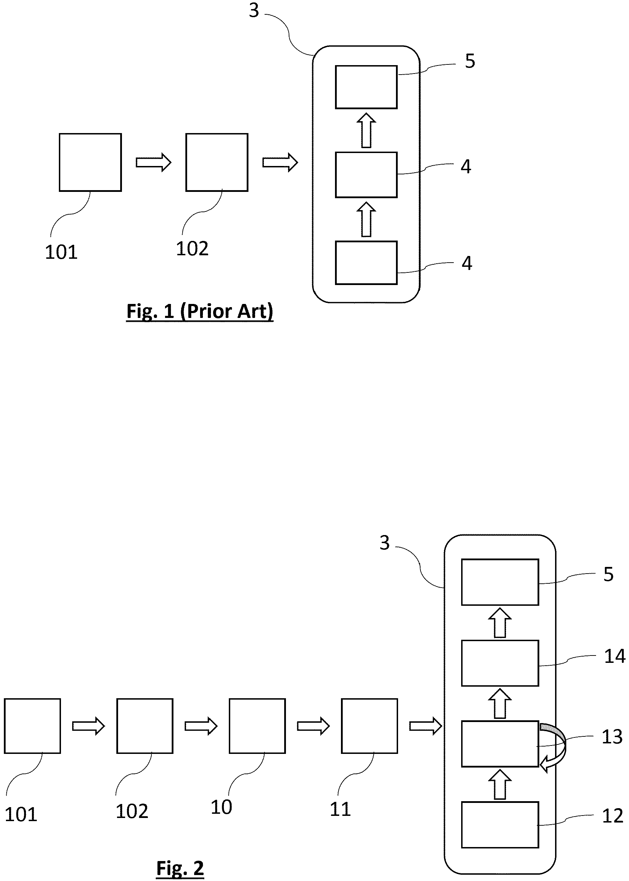

Figure 1 shows the different steps performed by the model described in the paper *"*DeepLog: Anomaly Detection and Diagnosis from system Logs through Deep Learning" written by Min, D *et al.*

First, during a step 101, the first message of the log file, that comprises several text strings messages, is read.

Then, during a step 102, the first message is parsed into a first pattern sequence and one or more variables. The first pattern sequence is transmitted to the neural network 3.

The neural network 3 comprises two LSTM layers 4 and one SoftMax layer 5. The neural network 3 then predicts the second pattern sequence that should be in the log file if the execution of the program is normal.

Then, the second message is parsed into a second pattern sequence and one or more variables and compared to the second pattern sequence predicted by the neural network.

The predicted second pattern sequence and the actual second pattern sequence are compared. If they are different, an anomaly is detected.

Figure 2 shows the different steps of the method according to the invention. Compared to the method of the prior art, there are several additional steps.

First, before transmitting the pattern sequence of the first message to the neural network, an under-sampling method 10 is performed. This under-sampling method allows balancing the dataset.

Then, a Bayesian search 11 is performed to determine the hyperparameters of the neural network 3.

In the embodiment of figure 2, the neural network 3 comprises an embedding layer 12 and a bi-LSTM layer 13. Those layers are not present in the prior art, and they allow improving accuracy of the prediction and scalability of the model.

The neural network 3 also comprises an attention layer 14 that allows minimizing the consumed resources.

First, during step 101, the first message of the log file, that comprises several text strings messages, is read.

Then, during a step 102, the first message is parsed into a first pattern sequence and one or more variables. The first pattern sequence is transmitted to the neural network 3.

The embedding layer 12 converts said first pattern sequence of the first message into a first pattern vector, said vector having a predefined position in a predetermined dense space.

The neural network then predicts a second pattern vector associated with a pattern sequence of the second message

Then, the second message is parsed into a second pattern sequence and one or more variables. This second pattern sequence is converted into a second pattern vector by the embedding layer 13. This second pattern vector is compared to the second pattern vector predicted by the neural network 3. If they are different, an anomaly is detected.

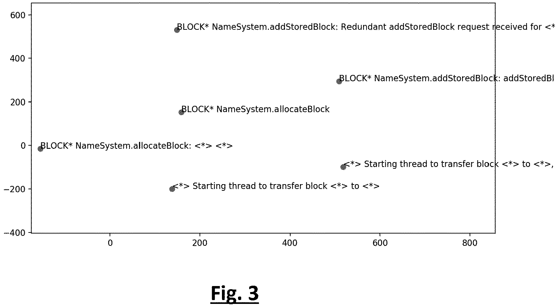

Figure 3 represents vectors obtained after the conversion of pattern sequences by the embedding layer. As can be seen, pattern sequences that have a close meaning are substantially aligned.

The invention is not limited to the examples that have just been described. The neural network can comprise more additional layers for example.

### Example

For example, the method according to the invention may be applied to the monitoring of a database. In the following example, the database is a database of an e-commerce platform. The database may for example store data about shopping items and customers.

Customers of the monitored e-commerce platform may have different but very similar behaviours. In general, a customer connects to the website, scroll over items then either logs out or put items in the basket, then either logs out or continues scrolling and navigating, then either pays then logs out or pays then keeps navigating then logs out. These behaviours are reflected in the database's logs.

Following sequence of messages may occur in log files:
- connection to database,
- select,
- delete,
- select,
- disconnect.

There is a limited number of scenarios that describe a normal customer behaviour. Any behaviour that significantly differs from the normal ones is said to be abnormal.

For example, the following example may be considered as abnormal: user logs in, adds large numbers of items to the basket, pays then logs out.

This event is worth noticing since it could a result of a pricing bug for example.

For example, the following sequence of messages may be considered as abnormal:
- connection to database,
- select select select select select,
- delete,
- select select select select select select select select select select,
- delete,
- select select select select select select select,
- disconnect.

The neural network will learn the normal sequence of messages. Therefore, it will predict this normal sequence of messages.

If the sequence of messages does not correspond to the normal predicted sequence, for example if it corresponds to the abnormal sequence above with a repetition of "select", the method of the invention may assert that an anomaly in the operation of the database has occurred.

## Claims

1. Method for automatically detecting anomalies in one or more log files related to the operation of one or more components and generated beforehand, each log file comprising at least a first and a second text string messages, each message comprising at least one pattern sequence, the method using a neural network (3) trained beforehand on previously acquired log files, and comprising at least the following steps:
a. parsing the first message to determine a first pattern sequence,
b. converting said first pattern sequence of the first message into a first pattern vector, said vector having a predefined position in a predetermined dense space,
c. transmitting said first pattern vector to the neural network (3) to predict at least one second pattern vector associated with a pattern sequence of the second message,
d. parsing the second message to determine a second pattern sequence,
e. converting said second pattern sequence of the second message into a second pattern vector, said vector having a predefined position in said predetermined dense space,
f. comparing said second pattern vector predicted at step c) to said second pattern vector obtained at step e) from said second pattern sequence, in order to assert if an anomaly in the operation of the component(s) has occurred.

2. The method according to the preceding claim, each message further comprising one or more variable(s) embedded in at least one pattern sequence or located between two consecutive pattern sequences, said variable(s) being dismissed from said messages in order for the neural network to use only the pattern sequences for the prediction.

3. The method according to claim 1 or 2, the step (b) of converting a pattern sequence into a pattern vector being performed by an embedding layer (12) of the neural network.

4. The method according to any one of the preceding claims, the neural network comprising at least two LSTM-layers forming a Bidirectional LSTM layer (13), one LSTM-layer being adapted to read the messages in a forward direction and the other LSTM-layer being adapted to read the messages in a backward direction.

5. The method according to any one of the preceding claims, the neural network being a recurrent neural network.

6. The method according to any one of the preceding claims, the neural network further comprising an attention layer (14) adapted to reduce the weight of certain types of pattern sequences.

7. The method according to any one of the preceding claims, the pattern sequences being allocated to several classes forming a dataset of classes, the method further comprising the step of:
- under-sampling (10) the classes of pattern sequences having the highest number of occurrences in order to get a substantially balanced dataset of classes.

8. The method according to any one of the preceding claims, further comprising the step of:
- automatically determine one or more hyperparameter(s) for the neural network by using a Bayesian search (11).

9. The method according to the preceding claim, said Bayesian search being performed based on the hypothesis that there is no anomaly in the operation of the component(s) associated with said log file(s).

10. The method according to any one of the preceding claims, said log files being related to the operation of several different components.

11. System for automatically detecting anomalies in one or more log files related to the operation of one or more components and generated beforehand, the system comprising at least one neural network (3) and being adapted to perform the method according to claim 1.

12. The system according to the preceding claim, the neural network comprising at least two LSTM-layers forming a Bidirectional LSTM layer (13), one LSTM-layer being adapted to read the messages in a forward direction and the other LSTM-layer being adapted to read the messages in a backward direction.

13. The system according to any one of the two preceding claims, the neural network further comprising at least one embedding layer adapted to perform step of converting a pattern sequence into a pattern vector.

14. A computer program comprising instructions which, when the program is executed by a computer, cause the computer to carry out the steps of the method according to claim 1.

15. Method for training a neural network, in particular included in a system according to any one of claims 11 to 13, used in the detection of anomalies in one or more log files related to the operation of one or more components, using at least previously acquired log files, each log file comprising at least a first and a second text string messages, each message comprising at least one pattern sequence, the first message of each log file having been parsed to determine a first pattern sequence, said first pattern sequence having been converted into a first pattern vector, said vector having a predefined position in a predetermined dense space, the method comprising at least the steps of associating said first pattern vector to a second pattern vector relative to a pattern sequence of the second message, and of training said neural network to learn said association.
